# EUROPÄISCHE PATENTSCHRIFT

(11) **EP 4 256 378 B1**
(45) Veröffentlichungstag und Bekanntmachung des Hinweises auf die Patenterteilung: **16.10.2024**
(21) Anmeldenummer: 21847674.5
(22) Anmeldetag: 23.11.2021
(51) Int. Cl.: G01S 15/931, G01S 15/87, G01S 7/527, G01S 15/66, G01S 15/46, G01S 15/58

(54) **VERFAHREN ZUR ERKENNUNG VON PARKLÜCKEN MITTELS ULTRASCHALLSENSOREN**
METHOD FOR IDENTIFYING PARKING SPACES BY MEANS OF ULTRASONIC SENSORS
PROCÉDÉ D'IDENTIFICATION DE PLACES DE STATIONNEMENT À L'AIDE DE CAPTEURS ULTRASONORES

(30) Priorität: 03.12.2020 DE 102020215253
(43) Veröffentlichungstag der Anmeldung: 11.10.2023
(73) Patentinhaber: Continental Autonomous Mobility Germany GmbH, 85057 Ingolstadt (DE)
(72) Erfinder: SULEIMAN, Wassim, 90411 Nürnberg (DE); KEKUD, Abhishek, 90411 Nürnberg (DE); BROWN, Christopher, 90411 Nürnberg (DE)
(74) Vertreter: Continental Corporation
(86) Internationale Anmeldenummer: PCT/DE2021/200199
(87) Internationale Veröffentlichungsnummer: WO 2022/117162

(56) Entgegenhaltungen:
- EP-A1- 1 731 922
- EP-A1- 2 216 236
- EP-A1- 2 293 102
- EP-A1- 2 899 076
- WO-A1-2021/224001
- DE-A1- 10 310 214
- DE-A1- 102005 038 524
- DE-A1- 102012 004 320
- DE-A1- 102013 018 721
- DE-A1- 102019 111 569
- DE-B3- 102017 101 476

## Beschreibung

Die Erfindung betrifft ein Verfahren zur Erkennung von Parklücken mittels einem oder mehreren Ultraschallsensoren.

Es ist bekannt, Umgebungsinformationen im Bereich eines Fahrzeugs mittels Ultraschallsensoren zu erfassen, beispielsweise, um beim Einparken den Abstand zu anderen Objekten zu erfassen.

Ebenfalls ist es bekannt, eine Parklückenerkennung basierend auf Informationen von mehreren Ultraschallsensoren durch Trilateration durchzuführen. Mittels der Trilateration ist es möglich, nicht nur den Abstand eines Objekts, sondern auch die Raumrichtung, in der sich das Objekt befindet, zu bestimmen.

In EP 1 731 922 A1 wird ein Verfahren zur Bestimmung von Freiflächen in einer Umgebung eines Kraftfahrzeugs beschrieben. Bei dem Verfahren werden dazu die folgenden Schritte iteriert: Durchführen einer Signallaufzeitmessung zum Vermessen von Objekten in der Umgebung des Kraftfahrzeugs; Bestimmen einer Objektwahrscheinlichkeitsverteilung anhand des Ergebnisses der Signallaufzeitmessung; und Fusionieren der Objektwahrscheinlichkeitsverteilung mit einer Hinderniswahrscheinlichkeitsverteilung, wobei die Hinderniswahrscheinlichkeitsverteilung mittels einer zellulären Umgebungskarte des Kraftfahrzeugs repräsentiert wird. Beim Fusionieren werden dabei Belegungswerte der Zellen verringert oder erhöht, wobei die Zellen ursprünglich einen vorgegebenen Belegungswert aufweisen. Die Zuordnung von reflektierten Signalanteilen zu den einzelnen Zellen erfolgt dabei basierend auf der gemessenen Signallaufzeit.

Nachteilig an den bekannten Verfahren zur Parklückenerkennung ist, dass diese rechenaufwändig sind und das Trilaterationsverfahren aufgrund von Ungenauigkeiten des Odometriesystems und Rauschen fehleranfällig ist.

Ausgehend hiervon ist es Aufgabe der Erfindung, ein Verfahren zur Erkennung von Parklücken mittels einem oder mehreren Ultraschallsensoren anzugeben, das einen geringen Rechen- und Speicheraufwand erfordert und eine geringe Fehleranfälligkeit aufweist.

Die Aufgabe wird durch ein Verfahren mit den Merkmalen des unabhängigen Patentanspruchs 1 gelöst. Bevorzugte Ausführungsformen sind Gegenstand der Unteransprüche. Ein System zur Erkennung von Parklücken mittels einem oder mehreren Ultraschallsensoren ist Gegenstand des nebengeordneten Patentanspruchs 10 und ein Fahrzeug mit einem solchen System ist Gegenstand des nebengeordneten Patentanspruchs 15.

Gemäß einem ersten Aspekt bezieht sich die Erfindung auf ein Verfahren zur Erkennung von Parklücken mittels zumindest eines Ultraschallsensors, der an einem Fahrzeug vorgesehen ist. Das Verfahren umfasst die folgenden Schritte:
Zunächst wird ein Ultraschallsignal durch einen Ultraschallsensor des Fahrzeugs ausgesendet. Hierbei kann lediglich ein einziger Ultraschallsensor ein Ultraschallsignal senden oder es können gleichzeitig oder zeitlich hintereinander mehrere Ultraschallsensoren jeweils Ultraschallsignale aussenden.

Anschließend wird ein reflektierter Signalanteil des Ultraschallsignals durch den Ultraschallsensor empfangen. Der reflektierte Signalanteil (nachfolgend auch als Echo bezeichnet) kann dabei entweder von demselben Ultraschallsensor empfangen werden, der das Ultraschallsignal gesendet hat oder von einem anderen Ultraschallsensor (sog. Kreuz-Echo).

Zudem wird ein Raster bereitgestellt, das sich auf einen Umgebungsbereich des Fahrzeugs bezieht. Das Raster weist eine Vielzahl von Zellen auf, wobei jede Zelle einem Teilbereich des Umgebungsbereichs des Fahrzeugs zugeordnet ist und jeder Zelle ein Belegungswert zugeordnet ist. Der Belegungswert einer Zelle gibt beispielsweise an, wie oft empfangene Echos bereits dieser Zelle zugeordnet wurden. Das Raster bzw. die Zellen des Rasters werden vorzugsweise mit der jeweiligen Position des Fahrzeugs mitbewegt, d.h. das Raster weist einen festen Bezug zu der Fahrzeugposition auf und bezieht sich nicht auf einen ortsfesten Umgebungsbereich.

Anschließend wird der reflektierte Signalanteil zu einem Satz von mehreren Zellen des Rasters basierend auf der Laufzeit des Ultraschallsignals zwischen dem Aussenden und Empfangen des reflektierten Signalanteils zugeordnet. Aufgrund der Laufzeit kann der Abstand des Objekts, das die Reflexion verursacht, von dem Ultraschallsensor ermittelt werden. Aufgrund der Kenntnis der Lage des Ultraschallsensors am Fahrzeug und den Odometriedaten des Fahrzeugs lässt sich der empfangene reflektierte Signalanteil einer Gruppe von Zellen zuordnen. Aufgrund dieser Zuordnung können die Belegungswerte derjenigen Zellen, denen der reflektierte Signalanteil zugeordnet wurde, jeweils um einen bestimmten Wert erhöht werden. Der Wert kann ein fester Wert sein oder sich aus Eigenschaften des reflektierten Signalanteils ergeben.

Anschließend wird eine Belegungsinformation basierend auf den Belegungswerten der Zellen des Satzes von Zellen bestimmt, und zwar basierend auf folgenden Schritten:
Zunächst wird diejenige Zelle des Satzes von Zellen bestimmt, die den maximalen Belegungswert aufweist. In anderen Worten wird diejenige Zelle der Gruppe von Zellen, denen zuvor das Echo zugeordnet wurde, ermittelt, die den höchsten Belegungswert aufweist.

Dieser maximale Belegungswert wird anschließend mit einem ersten Schwellwert verglichen.

Falls der maximale Belegungswert den ersten Schwellwert überschreitet, wird ein Zähler, der der Zelle mit dem maximalen Belegungswert zugeordnet ist, um einen Inkrementalwert verändert.

Anschließend wird der Zähler mit einem zweiten Schwellwert verglichen und ein Belegungsstatus der Zelle abhängig von dem Vergleichsergebnis festgelegt. Insbesondere wird die Zelle dann als belegt gekennzeichnet, d.h. es befindet sich im Bereich der Zelle ein reflektierendes Objekt, wenn der Zähler größer ist als der zweite Schwellwert.

Die vorher beschriebenen Schritte des Aussendens des Ultraschallsignals und Empfangens des Echos, des Zuordnen des Echos zu einem Satz von mehreren Zellen des Rasters, dem Erhöhen der Belegungswerte des Satzes von Zellen und dem Bestimmen von Belegungsinformationen wird mehrmals wiederholt.

Anschließend wird eine Parklückenerkennung basierend auf dem Belegungsstatus der Zellen des Rasters durchgeführt. Dabei werden diejenigen Umgebungsbereiche als "frei" für einen Parkvorgang beurteilt, deren Belegungsstatus "nicht belegt" ist.

Der technische Vorteil des erfindungsgemäßen Verfahrens besteht darin, dass eine im Hinblick auf Rechenleistung und Speicherbedarf verbesserte Erkennung von für einen Parkvorgang freien Bereichen in der Umgebung des Fahrzeugs ermöglicht wird. Das Verfahren ist dabei unempfindlich gegenüber dem Rauschen des Ultraschallsensors und die Falsch-Positiv-Rate kann durch die Filterung mittels mehrerer Schwellwerte minimiert werden.

Gemäß einem Ausführungsbeispiel wird der Satz von Zellen, deren Belegungswerte pro Sende/Empfangszyklus erhöht werden, durch ein Kreisringsegment bestimmt wird, dessen Mittenradius von der Laufzeit des Ultraschallsignals zwischen dem Aussenden und Empfangen des reflektierten Signalanteils abhängt und wobei die Erstreckung des Kreisringsegments in Umfangsrichtung von dem Empfangsbereich des Ultraschallsensors abhängt. In anderen Worten wird der Satz von Zellen ausschließlich durch die Laufzeit des Ultraschallsignals zwischen dem Sende- und Empfangszeitpunkt und dem Sende- und/oder Empfangswinkelbereich des Ultraschallsensors bestimmt. Damit ist durch das vorgeschlagene Verfahren eine Parklückenerkennung möglich, ohne eine Bestimmung des Azimutwinkels vorzunehmen, der die Richtung angibt, aus der das Echo empfangen wird.

Gemäß einem Ausführungsbeispiel weist das Kreisringsegment in radialer Richtung eine Breite aufweist, die durch einen Toleranzwert des Ultraschallsensors und/oder einen Toleranzwert des Odometriesystems, das zur Bestimmung der Position des Fahrzeugs und/oder des Ultraschallsensors verwendet wird, bestimmt wird. Die Breite des Kreisringsegments wird damit durch Ungenauigkeiten bestimmt, die sich aufgrund der Sensorik bzw. der Auswertung der Sensorinformationen ergeben.

Gemäß einem Ausführungsbeispiel werden die Belegungswerte der Zellen jeweils um einen Wert erhöht, der von der Amplitude des empfangenen reflektierten Signalanteils abhängt oder die Belegungswerte der Zellen werden jeweils um einen vom empfangenen reflektierten Signalanteil unabhängigen Fixwert erhöht. Wenn der Sensor eine Amplitudeninformation zur Verfügung stellt, kann diese dazu verwendet werden, den Belegungswert der Zellen amplitudenabhängig zu erhöhen. Dadurch kann die Stärke des Echos zur Veränderung des Belegungswerts herangezogen werden. Für den Fall, dass keine Amplitudeninformation zur Verfügung steht, kann der Belegungswert der Zellen um einen festen Zahlenwert, beispielsweise 1, erhöht werden.

Gemäß einem Ausführungsbeispiel werden parallel mehrere unterschiedliche Belegungsinformationen bestimmt, und zwar basierend auf Informationen, die durch mehrere an unterschiedlichen Positionen am Fahrzeug angeordnete Ultraschallsensoren ermittelt werden. In anderen Worten können zeitlich parallel Informationen von unterschiedlichen Ultraschallsensoren, die an verschiedenen Positionen am Fahrzeug vorgesehen sind, dazu verwendet werden, um Belegungswerte von Zellen zu verändern und nach der Veränderung der Belegungswerte daraus resultierende Belegungsinformationen zu gewinnen. Dadurch kann durch mehrere Sensorinformationen parallel ein Umgebungsbild generiert bzw. ein bestehendes Umgebungsbild aktualisiert werden.

Gemäß einem Ausführungsbeispiel wird die Ego-Bewegung des Fahrzeugs, die im Zeitraum zwischen dem Aussenden und dem Empfangen des Ultraschallsignals auftritt, kompensiert. Dadurch ist es möglich, die im Zeitraum zwischen dem Senden und Empfangen des Ultraschallsignals auftretende Lageveränderung des Fahrzeugs gegenüber einem stillstehenden Objekt in der Umgebung des Fahrzeugs zu kompensieren.

Gemäß einem Ausführungsbeispiel werden zur Bestimmung der Belegungsinformationen auch Kreuzechos zwischen unterschiedlichen Ultraschallsensoren ausgewertet. In anderen Worten trägt damit auch ein reflektierter Signalanteil, der von einem anderen Ultraschallsensor als dem sendenden Sensor empfangen wird, zur Bestimmung der Belegungsinformationen und damit zu einer verbesserten Erkennung von Parklücken bei.

Gemäß einem Ausführungsbeispiel ist das Raster ein mit dem Fahrzeug mitbewegtes Raster. Das Raster kann beispielsweise eine Länge und/oder Breite aufweisen, das der 3- bis 6-fachen Länge des Fahrzeugs entspricht, und beispielsweise eine Erstreckung von 20m mal 20m haben. Dadurch wird mittels des Rasters der unmittelbare Umgebungsbereich des Fahrzeugs umfasst, der durch die am Fahrzeug vorgesehenen Ultraschallsensoren erfasst werden kann. Dadurch können Speicher- und Rechenressourcen eingespart werden.

Gemäß einem Ausführungsbeispiel werden die Belegungswerte der Zellen und/oder die den Zellen zugeordneten Zähler und/oder der Belegungsstatus der Zellen in einem Ringspeicher abspeichert. Dadurch lassen sich die mit den Zellen des Rasters assoziierten Informationen speicheroptimiert abspeichern.

Gemäß einem weiteren Aspekt betrifft die Erfindung ein System zur Erkennung von Parklücken umfassend zumindest einen Ultraschallsensor und eine Recheneinheit, die zur Auswertung der vom Ultraschallsensor bereitgestellten Informationen ausgebildet ist. Das System ist dazu ausgebildet, folgende Schritte zu vollziehen:
a) Aussenden eines Ultraschallsignals durch einen Ultraschallsensor des Fahrzeugs;
b) Empfangen eines reflektierten Signalanteils des Ultraschallsignals durch den Ultraschallsensor;
c) Bereitstellen eines Rasters, das sich auf den Umgebungsbereich des Fahrzeugs bezieht, wobei das Raster eine Vielzahl von Zellen aufweist, wobei jede Zelle einem Teilbereich des Umgebungsbereichs des Fahrzeugs zugeordnet ist und jeder Zelle ein Belegungswert zugeordnet ist;
d) Zuordnen des reflektierten Signalanteils zu einem Satz von mehreren Zellen des Rasters basierend auf der Laufzeit des Ultraschallsignals zwischen dem Aussenden und Empfangen des reflektierten Signalanteils, wobei die Belegungswerte der Zellen, denen der reflektierte Signalanteil zugewiesen wird, jeweils um einen bestimmten Wert erhöht werden;
e) Bestimmen einer Belegungsinformation mittels der Recheneinheit basierend auf den Belegungswerten der Zellen des Satzes von Zellen durch:
   1. Bestimmen derjenigen Zelle des Satzes von Zellen, die den maximalen Belegungswert aufweist;
   2. Vergleichen des maximalen Belegungswerts mit einem ersten Schwellwert;
   3. Falls der maximale Belegungswert den ersten Schwellwert überschreitet, Verändern eines Zählers, der der Zelle mit dem maximalen Belegungswert zugeordnet ist, um einen Inkrementalwert; und
   4. Vergleichen des Zählers mit einem zweiten Schwellwert und Festlegen eines Belegungsstatus der Zelle abhängig von dem Vergleichsergebnis;
f) Mehrfaches Wiederholen der Schritte a), b), d) und e); und
g) Durchführen der Parklückenerkennung basierend auf dem Belegungsstatus der Zellen des Rasters.

Gemäß einem Ausführungsbeispiel des Systems ist die Recheneinheit dazu ausgebildet, den Satz von Zellen, deren Belegungswerte pro Sende/Empfangszyklus erhöht werden, durch ein Kreisringsegment zu bestimmen, dessen Mittenradius von der Laufzeit des Ultraschallsignals zwischen dem Aussenden und Empfangen des reflektierten Signalanteils abhängt und dessen Erstreckung in Umfangsrichtung von dem Empfangsbereich des Ultraschallsensors abhängt. In anderen Worten wird der Satz von Zellen ausschließlich durch die Laufzeit des Ultraschallsignals zwischen dem Sende- und Empfangszeitpunkt und dem Sende- und/oder Empfangswinkelbereich des Ultraschallsensors bestimmt. Damit ist durch das vorgeschlagene System eine Parklückenerkennung möglich, ohne eine Bestimmung des Azimutwinkels vorzunehmen, der die Richtung angibt, aus dem das Echo empfangen wird.

Gemäß einem Ausführungsbeispiel des Systems ist die Recheneinheit dazu ausgebildet, den Satz von Zellen, deren Belegungswerte pro Sende/Empfangszyklus erhöht werden, durch ein Kreisringsegment zu bestimmen, dessen Breite in radialer Richtung durch einen Toleranzwert des Ultraschallsensors und/oder durch einen Toleranzwert des Odometriesystems, das zur Bestimmung der Position des Fahrzeugs und/oder des Ultraschallsensors verwendet wird, bestimmt wird. Die Breite des Kreisringsegments wird damit durch Ungenauigkeiten bestimmt, die sich aufgrund der Sensorik bzw. der Auswertung der Sensorinformationen ergeben.

Gemäß einem Ausführungsbeispiel des Systems ist die Recheneinheit dazu ausgebildet, parallel mehrere unterschiedliche Belegungsinformationen zu bestimmen, und zwar basierend auf Informationen, die durch mehrere an unterschiedlichen Positionen am Fahrzeug angeordnete Ultraschallsensoren ermittelt werden. Dadurch kann basierend auf mehreren Sensorinformationen parallel ein Umgebungsbild generiert bzw. ein bestehendes Umgebungsbild aktualisiert werden.

Gemäß einem Ausführungsbeispiel des Systems ist die Recheneinheit dazu ausgebildet, die Ego-Bewegung des Fahrzeugs, die im Zeitraum zwischen dem Aussenden und dem Empfangen des Ultraschallsignals auftritt, zu kompensieren. Dadurch ist es möglich, die im Zeitraum zwischen dem Senden und Empfangen des Ultraschallsignals auftretende Lageveränderung des Fahrzeugs gegenüber einem stillstehenden Objekt in der Umgebung des Fahrzeugs zu kompensieren.

Gemäß einem nochmals weiteren Aspekt betrifft die Erfindung ein Fahrzeug mit einem System zur Erkennung von Parklücken gemäß einem der vorher beschriebenen Ausführungsbeispiele.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft und schematisch ein Fahrzeug mit mehreren Ultraschallsensoren beim Vorbeifahren an einer Längsparksituation;
- Fig. 2: beispielhaft die Darstellung eines mit einem Raster untergliederten Umgebungsbereichs eines Fahrzeugs und eine schematische Darstellung einer Detektion eines Objekts mittels eines Ultraschallsensors in dem Umgebungsbereich;
- Fig. 3: beispielhaft eine Darstellung einer Vielzahl von empfangenen Ultraschall-Echos im Umgebungsbereich eines Fahrzeugs, wobei die Echos in einer zweidimensionalen Karte lagemäßig eingetragen sind;
- Fig. 4: beispielhaft ein Ablaufdiagramm eines Verfahrens zur Ermittlung von den Zellen des Rasters zugeordneten Belegungsinformationen; und
- Fig. 5: beispielhaft ein Ablaufdiagramm, das die Schritte eines Verfahrens zur Erkennung von Parklücken im Umgebungsbereich des Fahrzeugs verdeutlicht.

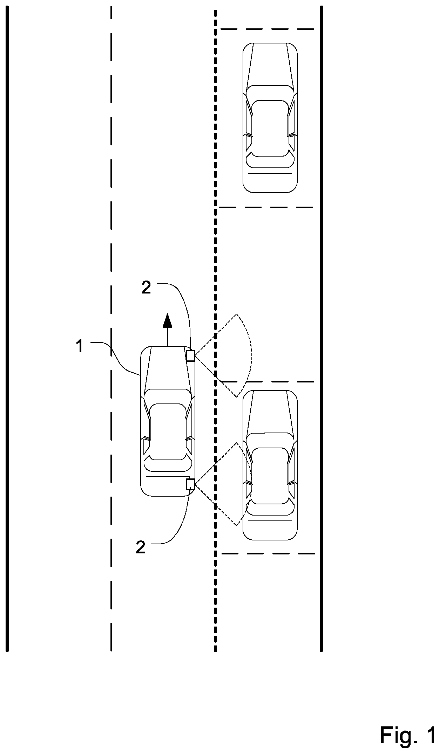

Figur 1 zeigt beispielhaft eine Einparksituation, bei der ein Fahrzeug 1 an mehreren Längsparkplätzen vorbeifährt. Dabei ist eine Parklücke, die sie zwischen zwei Fahrzeugen befindet, frei. Es versteht sich, dass die vorliegende Erfindung nicht nur auf Längsparksituationen beschränkt ist, sondern ebenfalls in Querparksituationen angewendet werden kann.

Das Fahrzeug 1 weist mehrere Ultraschallsensoren 2 auf, mittels denen Umgebungsinformationen erfassbar sind. Im gezeigten Ausführungsbeispiel sind zwei Ultraschallsensoren 2 gezeigt. Es versteht sich, dass am Fahrzeug 1 mehr als zwei Ultraschallsensoren vorgesehen sein können. Insbesondere können die Ultraschallsensoren 2 derart angeordnet sein, dass Umgebungsinformationen vor und hinter dem Fahrzeug 1 und zu beiden Seiten des Fahrzeugs 1 ermittelt werden können. Insbesondere sind die Ultraschallsensoren 2 dazu ausgebildet, in einem Sendezyklus ein Ultraschallsignal auszusenden und in einem daran anschließenden Empfangszyklus Signalanteile des Ultraschallsignals, die an Objekten in der Umgebung des Fahrzeugs 1 reflektiert wurden, zu empfangen. Die Zeitspanne zwischen dem Aussenden des Ultraschallsignals und dem Empfangen des reflektierten Signalanteils ist ein Maß für den Abstand des Objekts zu dem Ultraschallsensor 2. Dadurch können Informationen über Objekte in Umgebungsbereich des Fahrzeugs 1 ermittelt werden.

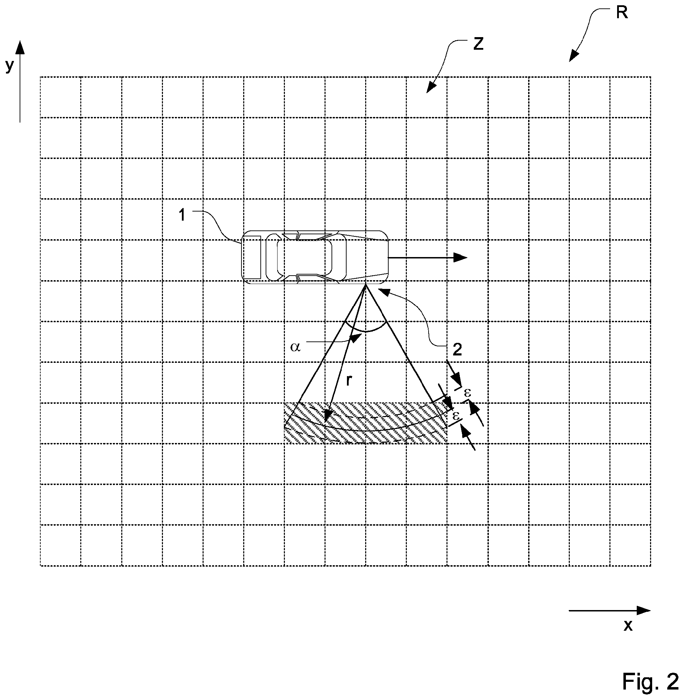

Figur 2 zeigt den Umgebungsbereich 3 des Fahrzeugs 1, der mittels eines Rasters R in Umgebungsteilbereiche aufgeteilt ist. Der Umgebungsbereich kann eine fest vorgegebene Ausdehnung in x und y-Richtung aufweisen, beispielsweise 20m x 20m. Das Raster R weist eine Vielzahl von Zellen Z auf, wobei die Zellen Z schachbrettartig unmittelbar aneinander anschließen, so dass sich jede Zelle Z auf einen bestimmten Umgebungsteilbereich bezieht. Das Raster R mit den Zellen Z dient dazu, von einem oder mehreren Ultraschallsensoren 2 über mehrere Sende-Empfangszyklen hinweg erfasste Umgebungsinformationen örtlich diskret zu kartografieren und damit ein diskretisiertes Umgebungsbild zu erhalten.

In Fig. 2 ist mit dem durchgezogenen Kreisbogenabschnitt eine Detektion des Ultraschallsensors 2 angedeutet. Der Mittenradius r kann aus der Laufzeit des Ultraschallsignals zwischen dem Zeitpunkt des Absendens und des Empfangs des reflektierten Anteils ermittelt werden. Der Winkel α, entlang dem sich der Kreisbogen erstreckt, ist durch den Erfassungsbereich des Ultraschallsensors 2 festgelegt.

Sowohl der Ultraschallsensor 2 als auch die Odometrieeinheit des Fahrzeugs 1, mittels der die örtliche Position des Fahrzeugs 1 und damit des Ultraschallsensors 2 bestimmbar ist, weisen eine gewisse Toleranz auf, so dass die Lage des detektierten Objekts relativ zum Fahrzeug 1 einer gewissen Ungenauigkeit unterliegt. Diese Ungenauigkeit wird durch den Toleranzwert ε berücksichtigt. Wenn ein Objekt im Abstand r zum Ultraschallsensor 2 erfasst wird, kann aufgrund der vorgenannten Ungenauigkeiten das Objekt im Bereich r ± ε liegen, d.h. in einem kreisbogenförmigen Streifen mit der Breite 2ε. Dieser kreisbogenförmige Streifen ist in Fig. 2 durch die beiden gestrichelt gezeichneten Kreisbögen gekennzeichnet.

Ein einzelner Ultraschallsensor 2 ermöglicht größtenteils keine Bestimmung des Azimutwinkels des reflektierten Signalanteils, so dass eine empfangene Reflexion aus jeder Richtung im Empfangsbereich des Ultraschallsensors 2 kommen kann. Somit kann eine Reflexion von einem Objekt stammen, das sich in dem kreisbogenförmigen Streifen mit der Breite 2ε befindet. In dem in Fig. 2 gezeigten Beispiel kann damit die Reflexion von Objekten stammen, die sich in den schraffiert gezeichneten Zellen Z befinden.

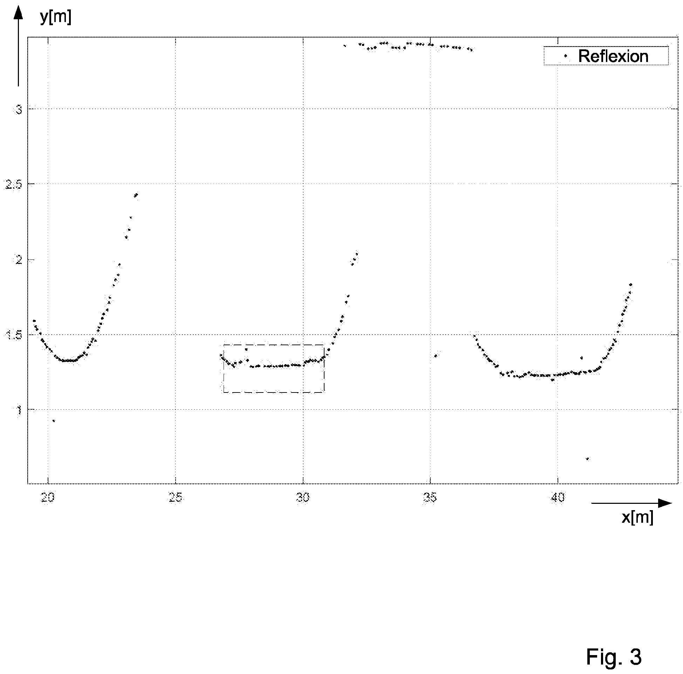

Fig. 3 zeigt ein Diagramm, in dem mittels Punkten die örtliche Lage von Reflexionen im Umgebungsbereich des Fahrzeugs 1 eingetragen sind. Es ist erkennbar, dass aufgrund von Rauschen und anderen nachteiligen Einflüssen Falsch-Positiv-Detektionen vorkommen, die die Erkennung von Parklücken verhindern bzw. erschweren. Nachfolgend wird ein Detektionsalgorithmus vorgeschlagen, der zum einen die Falsch-Positiv-Rate von Detektionen verringert, zum anderen eine geringe Rechenhardware (Prozessorleistung und/oder Speicherbedarf) erfordert.

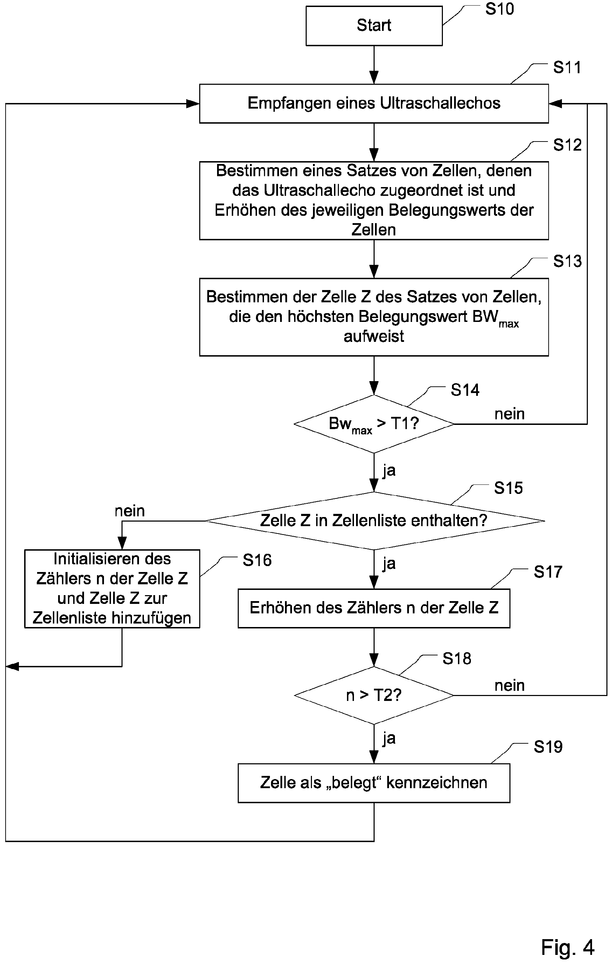

Fig. 4 zeigt ein Ablaufdiagramm eines Detektionsalgorithmus gemäß einem Ausführungsbeispiel der Erfindung.

Nach dem Start des Algorithmus (S10) wird zunächst eine leere Zellenliste initialisiert und ein erster Schwellwert T1 und ein zweiter Schwellwert T2 festgelegt. Danach wird ein Sende-Empfangs-Zyklus durchgeführt, bei dem ein oder mehrere Ultraschallsensoren 2 ein Ultraschallsignal aussenden und einen reflektierten Signalanteil empfangen (S11), wenn im Erfassungsbereich des Ultraschallsensors 2 ein Objekt vorhanden ist, an dem eine Reflektion auftritt.

Nach dem Empfang des reflektierten Signalanteils wird ein Satz von Zellen bestimmt, denen das Ultraschallecho zugeordnet ist. Dies erfolgt beispielsweise, wie zuvor beschrieben, unter Berücksichtigung der Laufzeit des Ultraschallsignals zwischen dem Zeitpunkt des Absendens des Ultraschallsignals und dem Empfang des reflektierten Anteils, dem Toleranzwert ε und dem Winkelbereich, in dem der Ultraschallsensor 2 Ultraschallsignale empfangen kann.

Den Zellen Z des Rasters R ist jeweils ein Belegungswert BW zugeordnet. Wenn in Schritt S12 festgestellt wird, dass ein empfangener, reflektierter Signalanteil einer Zelle zuzuordnen ist (im Beispiel der Fig. 2 sind dies die vier schraffierten Zellen Z), wird der Belegungswert BW der Zelle jeweils um einen gewissen Wert erhöht. Der Wert kann beispielsweise abhängig von der Signalstärke des empfangenen, reflektierten Signalanteils bestimmt werden oder kann ein fixer Inkrementalwert sein, beispielsweise 1.

Anschließend wird diejenige Zelle Z des Satzes von Zellen (im Beispiel der Fig. 2 sind dies die vier schraffierten Zellen Z) bestimmt, die den höchsten Belegungswert BWₘₐₓ aufweist. Hierzu sei angemerkt, dass nach einer Vielzahl von Empfangszyklen den Zellen Z des Rasters unterschiedlich hohe Belegungswerte BW zugeordnet sind, da die Zellen Z unterschiedlich oft einem Satz von Zellen zugeordnet werden, in den eine Detektion fällt.

Nach der Bestimmung der Zelle Z mit dem maximalen Belegungswert BWₘₐₓ wird geprüft, ob der maximale Belegungswert BWₘₐₓ größer als der Schwellwert T1 ist (S14). Wenn dies nicht der Fall ist, wird der Algorithmus beendet und beim Empfang eines neuen, reflektierten Ultraschallsignals (auch Ultraschallecho genannt) erneut durchgeführt (d.h. es erfolgt ein Rücksprung zu Schritt S11). Wenn jedoch der maximale Belegungswert BWₘₐₓ größer als der Schwellwert T1 ist, wird überprüft, ob die Zelle Z, der der maximale Belegungswert BWₘₐₓ zugeordnet ist, bereits in der Zellenliste enthalten ist (S15). Wenn dies nicht der Fall ist, wird die Zelle Z der Zellenliste hinzugefügt und ein Zähler n, der dieser Zelle zugeordnet ist, wird mit einem Startwert initialisiert (S16). Nach dem Hinzufügen der Zelle Z zur Zellenliste und dem Initialisieren des Zählers wird der Algorithmus beendet und beim Empfang eines neuen, reflektierten Ultraschallsignals (auch Ultraschallecho genannt) erneut durchgeführt (d.h. es erfolgt ein Rücksprung zu Schritt S11).

Falls jedoch in Schritt S15 festgestellt wird, dass die Zelle Z, der der maximale Belegungswert BWₘₐₓ zugeordnet ist, bereits in der Zellenliste enthalten ist, wird der Zähler n, der der Zelle Z zugeordnet ist, um einen Inkrementalwert, der insbesondere 1 sein kann, erhöht (S17).

Nach dem Inkrementieren des Zählers n wird geprüft, ob der inkrementierte Zähler n größer ist als der zweite Schwellwert T2 (S18).

Wenn dies nicht der Fall ist, wird der Algorithmus beendet und beim Empfang eines neuen, reflektierten Ultraschallsignals (auch Ultraschallecho genannt) erneut durchgeführt (d.h. es erfolgt ein Rücksprung zu Schritt S11).

Wenn jedoch die in Schritt S18 geprüfte Bedingung erfüllt ist, wird die Zelle Z, der der Zähler n zugeordnet ist, als "belegt" gekennzeichnet. Danach wird der Algorithmus beendet und beim Empfang eines neuen, reflektierten Ultraschallsignals (auch Ultraschallecho genannt) erneut durchgeführt (d.h. es erfolgt ein Rücksprung zu Schritt S11).

Der vorher beschriebene Algorithmus nutzt damit einen zweistufigen Detektionsansatz zur Ermittlung des Belegungszustands im Fahrzeugumfeld. Es wird dabei in einem zweistufigen Verfahren geprüft, ob im Bereich einer Zelle mehrfach eine Detektion erkannt wurde, um die Falsch-Positiv-Detektionsrate zu senken.

Basierend auf den als belegt gekennzeichneten Zellen Z kann ermittelt werden, welche Umgebungsteilbereiche in der Umgebung des Fahrzeugs 1 belegt sind. In anderen Worten lässt sich mittels der Belegungsinformation der Zellen ein rasterartiges Bild erzeugen, wobei die nicht belegten Informationen beispielsweise für eine Parklückenerkennung verwendet werden können. Dabei wird beispielsweise geprüft, ob der Abstand zwischen zwei als belegt gekennzeichneten Zellen größer ist als die Länge des Fahrzeugs 1, bzw. ob die Breite größer ist als die Breite des Fahrzeugs 1. Damit kann überprüft werden, ob eine in Länge und Breite für das Fahrzeug 1 passende Parklücke erkannt wurde.

Der vorbeschriebene Algorithmus wird vorzugsweise iterativ jeweils nach dem Empfang eines reflektierten Ultraschallsignals eines Ultraschallsensor 2 durchgeführt. Dabei können Empfangssignale mehrerer Ultraschallsensoren 2 für die Ermittlung des Belegungszustands der Zellen Z des Rasters R verwendet werden. Ebenso ist es möglich, dass Kreuz-Echos zwischen mehreren Ultraschallsensoren 2 zur Ermittlung des Belegungszustands der Zellen Z des Rasters R herangezogen werden. Dies bedeutet, dass auch ein reflektierter Signalanteil eines Ultraschallsignals, der von einem anderen Ultraschallsensor als dem sendenden Ultraschallsensor empfangen wird, für die Ermittlung des Belegungszustands herangezogen wird.

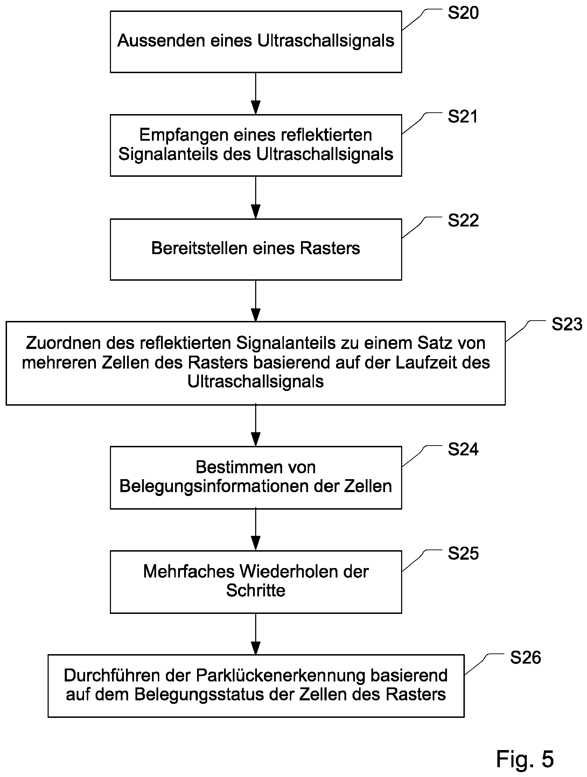

Fig. 5 zeigt in schematischer Darstellung die Schritte eines erfindungsgemäßen Verfahrens zur Erkennung von Parklücken mittels zumindest eines Ultraschallsensors 2 eines Fahrzeugs 1.

Zunächst wird ein Ultraschallsignal durch einen Ultraschallsensor 2 des Fahrzeugs 1 ausgesendet (S20).

Anschließend wird ein reflektierter Signalanteil des Ultraschallsignals durch den Ultraschallsensor 2 empfangen (S21). Der empfangende Ultraschallsensor kann gleich oder unterschiedlich zu dem sendenden Ultraschallsensor 2 sein.

Zudem wird ein Rasters R bereitgestellt, das sich auf den Umgebungsbereich des Fahrzeugs 1 bezieht (S22). Das Raster R weist eine Vielzahl von Zellen Z auf, wobei jede Zelle Z einem Teilbereich des Umgebungsbereichs des Fahrzeugs 1 zugeordnet ist und jeder Zelle Zein Belegungswert BW zugeordnet ist.

Der reflektierte Signalanteil wird zu einem Satz von mehreren Zellen Z des Rasters R basierend auf der Laufzeit des Ultraschallsignals zwischen dem Aussenden und Empfangen des reflektierten Signalanteils zugeordnet (S23). Die Belegungswerte BW der Zellen Z, denen der reflektierte Signalanteil zugewiesen wird, werden dabei jeweils um einen bestimmten Wert erhöht.

Anschließend wird eine Belegungsinformation mittels der Recheneinheit basierend auf den Belegungswerten BW der Zellen Z des Satzes von Zellen bestimmt (S24), und zwar durch folgende Schritte:
1. Bestimmen derjenigen Zelle Z des Satzes von Zellen, die den maximalen Belegungswert BWₘₐₓ aufweist;
2. Vergleichen des maximalen Belegungswerts BWₘₐₓ mit einem ersten Schwellwert T1;
3. Falls der maximale Belegungswert BWₘₐₓ den ersten Schwellwert T1 überschreitet, Verändern eines Zählers n, der der Zelle Z mit dem maximalen Belegungswert BWₘₐₓ zugeordnet ist, um einen Inkrementalwert; und
4. Vergleichen des Zählers n mit einem zweiten Schwellwert T2 und Festlegen eines Belegungsstatus der Zelle Z abhängig von dem Vergleichsergebnis.

Anschließend werden die Schritte S20 bis S24 mehrmals wiederholt, d.h. es erfolgt mehrfach ein Aussenden / Empfangen von Ultraschallsignalen und ein darauf basiertes Bestimmen von Belegungsinformationen (S25). Vorzugsweise erfolgt dies an unterschiedlichen Positionen des Fahrzeugs 1, wobei die Bewegung des Fahrzeugs 1 durch dessen Odometriedaten bei der Bestimmung der Belegungsinformationen kompensiert wird.

Zuletzt wird eine Parklückenerkennung basierend auf dem Belegungsstatus der Zellen Z des Rasters R durchgeführt (S26).

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Fahrzeug
- 2: Ultraschallsensor

- BW: Belegungswert
- BWₘₐₓ: maximaler Belegungswert
- ε: Toleranzwert
- n: Zähler
- r: Mittenradius
- R: Raster
- T1: erster Schwellwert
- T2: zweiter Schwellwert
- Z: Zelle

## Patentansprüche

1. Verfahren zur Erkennung von Parklücken mittels zumindest eines Ultraschallsensors (2) eines Fahrzeugs (1) umfassend folgende Schritte:
a) Aussenden eines Ultraschallsignals durch einen Ultraschallsensor (2) des Fahrzeugs (1) (S20);
b) Empfangen eines reflektierten Signalanteils des Ultraschallsignals durch den Ultraschallsensor (2) (S21);
c) Bereitstellen eines Rasters (R), das sich auf einen Umgebungsbereich des Fahrzeugs (1) bezieht, wobei das Raster (R) eine Vielzahl von Zellen (Z) aufweist, wobei jede Zelle (Z) einem Teilbereich des Umgebungsbereichs des Fahrzeugs (1) zugeordnet ist und jeder Zelle (Z) ein Belegungswert zugeordnet ist (S22);
d) Zuordnen des reflektierten Signalanteils zu einem Satz von mehreren Zellen (Z) des Rasters (S23) basierend auf der Laufzeit des Ultraschallsignals zwischen dem Aussenden und Empfangen des reflektierten Signalanteils, wobei die Belegungswerte (BW) der Zellen (Z), denen der reflektierte Signalanteil zugewiesen wird, jeweils um einen bestimmten Wert erhöht werden;
e) Bestimmen einer Belegungsinformation (S24) basierend auf den Belegungswerten (BW) der Zellen (Z) des Satzes von Zellen durch:
1. Bestimmen derjenigen Zelle (Z) des Satzes von Zellen, die den maximalen Belegungswert (BWₘₐₓ) aufweist;
2. Vergleichen des maximalen Belegungswerts (BWₘₐₓ) mit einem ersten Schwellwert (T1);
3. Falls der maximale Belegungswert (BWₘₐₓ) den ersten Schwellwert (T1) überschreitet, Verändern eines Zählers (n), der der Zelle mit dem maximalen Belegungswert (BWₘₐₓ) zugeordnet ist, um einen Inkrementalwert; und
4. Vergleichen des Zählers (n) mit einem zweiten Schwellwert (T2) und Festlegen eines Belegungsstatus der Zelle (Z) abhängig von dem Vergleichsergebnis;
f) Mehrfaches Wiederholen der Schritte a), b), d) und e) (S25); und
g) Durchführen der Parklückenerkennung basierend auf dem Belegungsstatus der Zellen (Z) des Rasters (R) (S26).

2. Verfahren nach Anspruch 1, **dadurch gekennzeichnet, dass** der Satz von Zellen, deren Belegungswerte (BW) pro Sende/Empfangszyklus erhöht werden, durch ein Kreisringsegment bestimmt wird, dessen Mittenradius (r) von der Laufzeit des Ultraschallsignals zwischen dem Aussenden und Empfangen des reflektierten Signalanteils abhängt und wobei die Erstreckung des Kreisringsegments in Umfangsrichtung von dem Empfangsbereich des Ultraschallsensors (2) abhängt.

3. Verfahren nach Anspruch 2, **dadurch gekennzeichnet, dass** das Kreisringsegment in radialer Richtung eine Breite aufweist, die durch einen Toleranzwert (ε) des Ultraschallsensors (2) und/oder einen Toleranzwert des Odometriesystems, das zur Bestimmung der Position des Fahrzeugs (1) und/oder des Ultraschallsensors (2) verwendet wird, bestimmt wird.

4. Verfahren nach einem der vorhergehenden Ansprüche, **dadurch gekennzeichnet, dass** die Belegungswerte (BW) der Zellen (Z) jeweils um einen Wert erhöht werden, der von der Amplitude des empfangenen reflektierten Signalanteils abhängt oder dass die Belegungswerte (BW) der Zellen (Z) jeweils um einen vom empfangenen reflektierten Signalanteil unabhängigen Fixwert erhöht werden.

5. Verfahren nach einem der vorhergehenden Ansprüche, **dadurch gekennzeichnet, dass** parallel mehrere unterschiedliche Belegungsinformationen bestimmt werden, und zwar basierend auf Informationen, die durch mehrere an unterschiedlichen Positionen am Fahrzeug (1) angeordnete Ultraschallsensoren (2) ermittelt werden.

6. Verfahren nach einem der vorhergehenden Ansprüche, **dadurch gekennzeichnet, dass** die Ego-Bewegung des Fahrzeugs (1), die im Zeitraum zwischen dem Aussenden und dem Empfangen des Ultraschallsignals auftritt, kompensiert wird.

7. Verfahren nach einem der vorhergehenden Ansprüche, **dadurch gekennzeichnet, dass** zur Bestimmung der Belegungsinformationen auch Kreuzechos zwischen unterschiedlichen Ultraschallsensoren (2) ausgewertet werden.

8. Verfahren nach einem der vorhergehenden Ansprüche, **dadurch gekennzeichnet, dass** das Raster (R) ein mit dem Fahrzeug (1) mitbewegtes Raster ist.

9. Verfahren nach einem der vorhergehenden Ansprüche, **dadurch gekennzeichnet, dass** die Belegungswerte (BW) der Zellen (Z) und/oder die den Zellen (Z) zugeordneten Zähler (n) und/oder der Belegungsstatus der Zellen (Z) in einem Ringspeicher abspeichert werden.

10. System zur Erkennung von Parklücken umfassend zumindest einen Ultraschallsensor (2) und eine Recheneinheit, die zur Auswertung der vom Ultraschallsensor (2) bereitgestellten Informationen ausgebildet ist, wobei das System dazu ausgebildet ist folgende Schritte zu vollziehen:
h) Aussenden eines Ultraschallsignals durch einen Ultraschallsensor (2) des Fahrzeugs (1);
i) Empfangen eines reflektierten Signalanteils des Ultraschallsignals durch den Ultraschallsensor (2);
j) Bereitstellen eines Rasters (R), das sich auf den Umgebungsbereich des Fahrzeugs (1) bezieht, wobei das Raster (R) eine Vielzahl von Zellen (Z) aufweist, wobei jede Zelle (Z) einem Teilbereich des Umgebungsbereichs des Fahrzeugs (1) zugeordnet ist und jeder Zelle (Z) ein Belegungswert (BW) zugeordnet ist;
k) Zuordnen des reflektierten Signalanteils zu einem Satz von mehreren Zellen (Z) des Rasters (R) basierend auf der Laufzeit des Ultraschallsignals zwischen dem Aussenden und Empfangen des reflektierten Signalanteils, wobei die Belegungswerte (BW) der Zellen (Z), denen der reflektierte Signalanteil zugewiesen wird, jeweils um einen bestimmten Wert erhöht werden;
l) Bestimmen einer Belegungsinformation mittels der Recheneinheit basierend auf den Belegungswerten (BW) der Zellen (Z) des Satzes von Zellen durch:
5. Bestimmen derjenigen Zelle (Z) des Satzes von Zellen, die den maximalen Belegungswert (BWₘₐₓ) aufweist;
6. Vergleichen des maximalen Belegungswerts (BWₘₐₓ) mit einem ersten Schwellwert (T1);
7. Falls der maximale Belegungswert (BWₘₐₓ) den ersten Schwellwert (T1) überschreitet, Verändern eines Zählers (n), der der Zelle (Z) mit dem maximalen Belegungswert (BWₘₐₓ) zugeordnet ist, um einen Inkrementalwert; und
8. Vergleichen des Zählers (n) mit einem zweiten Schwellwert (T2) und Festlegen eines Belegungsstatus der Zelle (Z) abhängig von dem Vergleichsergebnis;
m) Mehrfaches Wiederholen der Schritte a), b), d) und e); und
n) Durchführen der Parklückenerkennung basierend auf dem Belegungsstatus der Zellen (Z) des Rasters (R).

11. System nach Anspruch 10, **dadurch gekennzeichnet, dass** die Recheneinheit dazu ausgebildet ist, den Satz von Zellen (Z), deren Belegungswerte (BW) pro Sende/Empfangszyklus erhöht werden, durch ein Kreisringsegment zu bestimmen, dessen Mittenradius (r) von der Laufzeit des Ultraschallsignals zwischen dem Aussenden und Empfangen des reflektierten Signalanteils abhängt und dessen Erstreckung in Umfangsrichtung von dem Empfangsbereich des Ultraschallsensors (2) abhängt.

12. System nach Anspruch 10 oder 11, **dadurch gekennzeichnet, dass** die Recheneinheit dazu ausgebildet ist, den Satz von Zellen (Z), deren Belegungswerte (BW) pro Sende/Empfangszyklus erhöht werden, durch ein Kreisringsegment zu bestimmen, dessen Breite in radialer Richtung durch einen Toleranzwert (ε) des Ultraschallsensors (2) und/oder durch einen Toleranzwert (ε) des Odometriesystems, das zur Bestimmung der Position des Fahrzeugs (1) und/oder des Ultraschallsensors (2) verwendet wird, bestimmt wird.

13. System nach einem der Ansprüche 10 bis 12, **dadurch gekennzeichnet, dass** die Recheneinheit dazu ausgebildet ist, parallel mehrere unterschiedliche Belegungsinformationen zu bestimmen, und zwar basierend auf Informationen, die durch mehrere an unterschiedlichen Positionen am Fahrzeug (1) angeordnete Ultraschallsensoren (2) ermittelt werden.

14. System nach einem der Ansprüche 10 bis 13, **dadurch gekennzeichnet, dass** die Recheneinheit dazu ausgebildet ist, die Ego-Bewegung des Fahrzeugs (1), die im Zeitraum zwischen dem Aussenden und dem Empfangen des Ultraschallsignals auftritt, zu kompensieren.

15. Fahrzeug umfassend ein System gemäß einem der Ansprüche 10 bis 14.

## Claims

1. Method for identifying parking spaces by means of at least one ultrasonic sensor (2) of a vehicle (1), comprising the following steps:
a) emission of an ultrasonic signal by an ultrasonic sensor (2) of the vehicle (1) (S20);
b) reception of a reflected signal component of the ultrasonic signal by the ultrasonic sensor (2) (S21);
c) provision of a grid (R), which refers to a region surrounding the vehicle (1), wherein the grid (R) has a plurality of cells (Z), wherein each cell (Z) is assigned to a subregion of the region surrounding the vehicle (1) and an occupancy value is assigned to each cell (Z) (S22);
d) assignment of the reflected signal component to a set of multiple cells (Z) of the grid (S23) based on the propagation time of the ultrasonic signal between the emission and the reception of the reflected signal component, wherein the occupancy values (BW) of the cells (Z) to which the reflected signal component is allocated are in each case increased by a specific value;
e) determination of an item of occupancy information (S24) based on the occupancy values (BW) of the cells (Z) of the set of cells by:
1. determination of that cell (Z) of the set of cells that has the maximum occupancy value (BWₘₐₓ);
2. comparison of the maximum occupancy value (BWₘₐₓ) with a first threshold value (T1);
3. if the maximum occupancy value (BWₘₐₓ) exceeds the first threshold value (T1), changing of a counter (n), which is assigned to the cell having the maximum occupancy value (BWₘₐₓ), by an incremental value; and
4. comparison of the counter (n) with a second threshold value (T2) and specification of an occupancy status of the cell (Z) depending on the comparison result;
f) multiple repetition of steps a), b), d) and e) (S25); and
g) performance of parking space identification based on the occupancy status of the cells (Z) of the grid (R) (S26).

2. Method according to Claim 1, **characterized in that** the set of cells whose occupancy values (BW) are increased per transmission/reception cycle is determined by a circular ring segment, a middle radius (r) of which depends on the propagation time of the ultrasonic signal between the emission and the reception of the reflected signal component, and wherein the extension of the circular ring segment in a circumferential direction depends on the reception range of the ultrasonic sensor (2).

3. Method according to Claim 2, **characterized in that** the circular ring segment in a radial direction has a width that is determined by a tolerance value (ε) of the ultrasonic sensor (2) and/or a tolerance value of the odometry system that is used to determine the position of the vehicle (1) and/or of the ultrasonic sensor (2).

4. Method according to any one of the preceding claims, **characterized in that** the occupancy values (BW) of the cells (Z) are in each case increased by a value that depends on the amplitude of the received reflected signal component, or **in that** the occupancy values (BW) of the cells (Z) are in each case increased by a fixed value that is not dependent on the received reflected signal component.

5. Method according to any one of the preceding claims, **characterized in that** multiple different items of occupancy information are determined in parallel, specifically based on information that is established by multiple ultrasonic sensors (2) arranged at different positions on the vehicle (1).

6. Method according to any one of the preceding claims, **characterized in that** the ego movement of the vehicle (1) occurring in the period of time between the emission and the reception of the ultrasonic signal is compensated.

7. Method according to any one of the preceding claims, **characterized in that** cross echoes between different ultrasonic sensors (2) are also evaluated in order to determine the item of occupancy information.

8. Method according to any one of the preceding claims, **characterized in that** the grid (R) is a grid that is moved together with the vehicle (1).

9. Method according to any one of the preceding claims, **characterized in that** the occupancy values (BW) of the cells (Z) and/or the counters (n) assigned to the cells (Z) and/or the occupancy status of the cells (Z) are stored in a ring memory.

10. System for identifying parking spaces, comprising at least one ultrasonic sensor (2) and a computation unit that is configured to evaluate the information provided by the ultrasonic sensor (2), wherein the system is configured to execute the following steps:
h) emission of an ultrasonic signal by an ultrasonic sensor (2) of the vehicle (1);
i) reception of a reflected signal component of the ultrasonic signal by the ultrasonic sensor (2);
j) provision of a grid (R), which refers to the region surrounding the vehicle (1), wherein the grid (R) has a plurality of cells (Z), wherein each cell (Z) is assigned to a subregion of the region surrounding the vehicle (1) and an occupancy value (BW) is assigned to each cell (Z);
k) assignment of the reflected signal component to a set of multiple cells (Z) of the grid (R) based on the propagation time of the ultrasonic signal between the emission and the reception of the reflected signal component, wherein the occupancy values (BW) of the cells (Z) to which the reflected signal component is allocated are in each case increased by a specific value;
l) determination of an item of occupancy information by means of the computation unit based on the occupancy values (BW) of the cells (Z) of the set of cells by:
5. determination of that cell (Z) of the set of cells that has the maximum occupancy value (BWₘₐₓ);
6. comparison of the maximum occupancy value (BWₘₐₓ) with a first threshold value (T1);
7. if the maximum occupancy value (BWₘₐₓ) exceeds the first threshold value (T1), changing of a counter (n), which is assigned to the cell (Z) having the maximum occupancy value (BWₘₐₓ), by an incremental value; and
8. comparison of the counter (n) with a second threshold value (T2) and specification of an occupancy status of the cell (Z) depending on the comparison result;
m) multiple repetition of steps a), b), d) and e); and
n) performance of parking space identification based on the occupancy status of the cells (Z) of the grid (R).

11. System according to Claim 10, **characterized in that** the computation unit is configured to determine the set of cells (Z) whose occupancy values (BW) are increased per transmission/reception cycle by a circular ring segment, a middle radius (r) of which depends on the propagation time of the ultrasonic signal between the emission and the reception of the reflected signal component and the extension of said circular ring segment in a circumferential direction depends on the reception range of the ultrasonic sensor (2).

12. System according to Claim 10 or 11, **characterized in that** the computation unit is configured to determine the set of cells (Z) whose occupancy values (BW) are increased per emission/reception cycle by a circular ring segment, the width of which in a radial direction is determined by a tolerance value (ε) of the ultrasonic sensor (2) and/or by a tolerance value (ε) of the odometry system that is used to determine the position of the vehicle (1) and/or of the ultrasonic sensor (2).

13. System according to any one of Claims 10 to 12, **characterized in that** the computation unit is configured to determine multiple different items of occupancy information in parallel, specifically based on information that is established by multiple ultrasonic sensors (2) arranged at different positions on the vehicle (1).

14. System according to any one of Claims 10 to 13, **characterized in that** the computation unit is configured to compensate for the ego movement of the vehicle (1) occurring in the period of time between the emission and the reception of the reflected signal component.

15. Vehicle comprising a system according to one of Claims 10 to 14.

## Revendications

1. Procédé permettant d'identifier des places de stationnement au moyen d'au moins un capteur à ultrasons (2) d'un véhicule (1), comprenant les étapes suivantes consistant à :
a) émettre un signal ultrasonore par un capteur à ultrasons (2) du véhicule (1) (S20) ;
b) recevoir une composante de signal réfléchie du signal ultrasonore par le capteur à ultrasons (2) (S21) ;
c) fournir une grille (R) qui se réfère à une zone environnante du véhicule (1), la grille (R) présentant une pluralité de cellules (Z), chaque cellule (Z) étant attribuée à une zone partielle de la zone environnante du véhicule (1) et une valeur d'occupation étant attribuée à chaque cellule (Z) (S22) ;
d) attribuer la composante de signal réfléchie à un ensemble de plusieurs cellules (Z) de la grille (S23) sur la base du temps de propagation du signal ultrasonore entre l'émission et la réception de la composante de signal réfléchie, dans lequel les valeurs d'occupation (BW) des cellules (Z) auxquelles est affectée la composante de signal réfléchie sont respectivement augmentées d'une valeur déterminée ;
e) déterminer une information d'occupation (S24) sur la base des valeurs d'occupation (BW) des cellules (Z) de l'ensemble de cellules par :
1. la détermination de la cellule (Z) de l'ensemble de cellules qui présente la valeur d'occupation maximale (BWₘₐₓ) ;
2. la comparaison de la valeur d'occupation maximale (BWₘₐₓ) avec une première valeur seuil (T1) ;
3. si la valeur d'occupation maximale (BWₘₐₓ) dépasse la première valeur seuil (T1), la modification d'une valeur incrémentale d'un compteur (n) qui est attribué à la cellule ayant la valeur d'occupation maximale (BWₘₐₓ) ; et
4. la comparaison du compteur (n) avec une deuxième valeur seuil (T2) et la définition d'un statut d'occupation de la cellule (Z) en fonction du résultat de comparaison ;
f) répéter plusieurs fois les étapes a), b), d) et e) (S25) ; et
g) effectuer l'identification de place de stationnement sur la base du statut d'occupation des cellules (Z) de la grille (R) (S26).

2. Procédé selon la revendication 1, **caractérisé en ce que** l'ensemble de cellules dont les valeurs d'occupation (BW) sont augmentées pour chaque cycle d'émission/réception est déterminé par un segment d'anneau de cercle dont le rayon au centre (r) dépend du temps de propagation du signal ultrasonore entre l'émission et la réception de la composante de signal réfléchie, et dans lequel l'étendue du segment d'anneau de cercle dans la direction circonférentielle dépend de la zone de réception du capteur à ultrasons (2).

3. Procédé selon la revendication 2, **caractérisé en ce que** le segment d'anneau de cercle présente dans la direction radiale une largeur qui est déterminée par une valeur de tolérance (ε) du capteur à ultrasons (2) et/ou une valeur de tolérance du système odométrique qui est utilisé pour déterminer la position du véhicule (1) et/ou du capteur à ultrasons (2).

4. Procédé selon l'une quelconque des revendications précédentes, **caractérisé en ce que** les valeurs d'occupation (BW) des cellules (Z) sont respectivement augmentées d'une valeur qui dépend de l'amplitude de la composante de signal réfléchie reçue, ou **en ce que** les valeurs d'occupation (BW) des cellules (Z) sont augmentées respectivement d'une valeur fixe indépendante de la composante de signal réfléchie reçue.

5. Procédé selon l'une quelconque des revendications précédentes, **caractérisé en ce que** plusieurs informations d'occupation différentes sont déterminées en parallèle, notamment sur la base d'informations qui sont établies par plusieurs capteurs à ultrasons (2) disposés à différentes positions sur le véhicule (1).

6. Procédé selon l'une quelconque des revendications précédentes, **caractérisé en ce que** le mouvement ego du véhicule (1) qui survient dans la période entre l'émission et la réception du signal ultrasonore est compensé.

7. Procédé selon l'une quelconque des revendications précédentes, **caractérisé en ce que** des échos croisés entre différents capteurs ultrasonores (2) sont également évalués pour la détermination des informations d'occupation.

8. Procédé selon l'une quelconque des revendications précédentes, **caractérisé en ce que** la grille (R) est une grille déplacée conjointement avec le véhicule (1).

9. Procédé selon l'une quelconque des revendications précédentes, **caractérisé en ce que** les valeurs d'occupation (BW) des cellules (Z) et/ou les compteurs (n) associés aux cellules (Z) et/ou le statut d'occupation des cellules (Z) sont sauvegardés dans une mémoire annulaire.

10. Système permettant d'identifier des places de stationnement, comprenant au moins un capteur à ultrasons (2) et une unité de calcul qui est réalisée pour évaluer les informations fournies par le capteur à ultrasons (2), le système étant réalisé pour effectuer les étapes suivantes consistant à :
h) émettre un signal ultrasonore par un capteur à ultrasons (2) du véhicule (1) ;
i) recevoir une composante de signal réfléchie du signal ultrasonore par le capteur à ultrasons (2) ;
j) fournir une grille (R) qui se réfère à une zone environnante du véhicule (1), la grille (R) présentant une pluralité de cellules (Z), chaque cellule (Z) étant attribuée à une zone partielle de la zone environnante du véhicule (1) et une valeur d'occupation (BW) étant attribuée à chaque cellule (Z) ;
k) attribuer la composante de signal réfléchie à un ensemble de plusieurs cellules (Z) de la grille (R) sur la base du temps de propagation du signal ultrasonore entre l'émission et la réception de la composante de signal réfléchie, dans lequel les valeurs d'occupation (BW) des cellules (Z) auxquelles est affectée la composante de signal réfléchie sont respectivement augmentées d'une valeur déterminée ;
l) déterminer une information d'occupation au moyen de l'unité de calcul sur la base des valeurs d'occupation (BW) des cellules (Z) de l'ensemble de cellules par :
5. la détermination de la cellule (Z) de l'ensemble de cellules qui présente la valeur d'occupation maximale (BWmax) ;
6. la comparaison de la valeur d'occupation maximale (BWₘₐₓ) avec une première valeur seuil (T1) ;
7. si la valeur d'occupation maximale (BWₘₐₓ) dépasse la première valeur seuil (T1), la modification d'une valeur incrémentale d'un compteur (n) qui est attribué à la cellule (Z) ayant la valeur d'occupation maximale (BWₘₐₓ) ; et
8. la comparaison du compteur (n) avec une deuxième valeur seuil (T2) et la définition d'un statut d'occupation de la cellule (Z) en fonction du résultat de comparaison ;
m) répéter plusieurs fois les étapes a), b), d) et e) ; et
n) effectuer l'identification de places de stationnement sur la base du statut d'occupation des cellules (Z) de la grille (R).

11. Système selon la revendication 10, **caractérisé en ce que** l'unité de calcul est réalisée pour déterminer l'ensemble de cellules (Z) dont les valeurs d'occupation (BW) sont augmentées pour chaque cycle d'émission/réception par un segment d'anneau de cercle dont le rayon au centre (r) dépend du temps de propagation du signal ultrasonore entre l'émission et la réception de la composante de signal réfléchie et dont l'étendue dans la direction circonférentielle dépend de la zone de réception du capteur à ultrasons (2).

12. Système selon la revendication 10 ou 11, **caractérisé en ce que** l'unité de calcul est réalisée pour déterminer l'ensemble de cellules (Z) dont les valeurs d'occupation (BW) sont augmentées pour chaque cycle d'émission/réception par un segment d'anneau de cercle dont la largeur dans la direction radiale est déterminée par une valeur de tolérance (ε) du capteur à ultrasons (2) et/ou une valeur de tolérance (ε) du système odométrique qui est utilisé pour déterminer la position du véhicule (1) et/ou du capteur à ultrasons (2).

13. Système selon l'une quelconque des revendications 10 à 12, **caractérisé en ce que** l'unité de calcul est réalisée pour déterminer en parallèle plusieurs informations d'occupation différentes, notamment sur la base d'informations qui sont établies par plusieurs capteurs à ultrasons (2) disposés à différentes positions sur le véhicule (1).

14. Système selon l'une quelconque des revendications 10 à 13, **caractérisé en ce que** l'unité de calcul est réalisée pour compenser le mouvement ego du véhicule (1) qui survient dans la période entre l'émission et la réception du signal ultrasonore.

15. Véhicule comprenant un système selon l'une quelconque des revendications 10 à 14.
